# EUROPÄISCHE PATENTSCHRIFT

(11) **EP 1 188 197 B1**
(45) Veröffentlichungstag und Bekanntmachung des Hinweises auf die Patenterteilung: **30.07.2003**
(21) Anmeldenummer: 00949067.3
(22) Anmeldetag: 25.05.2000
(51) Int. Cl.: H01M 8/02, C25B 9/00

(54) **MEMBRAN-ELEKTRODEN-EINHEIT FÜR BRENNSTOFFZELLEN UND DGL.**
MEMBRANE ELECTRODE UNIT FOR FUEL CELLS AND THE LIKE
UNITE MEMBRANE-ELECTRODES POUR PILES A COMBUSTIBLE OU SIMILAIRES

(30) Priorität: 28.05.1999 DE 19926026
(43) Veröffentlichungstag der Anmeldung: 20.03.2002
(73) Patentinhaber: Heliocentris Energiesysteme GmbH, 12489 Berlin (DE)
(72) Erfinder: BRONOLD, Matthias, D-12207 Berlin (DE); COLELL, Henrik, D-12489 Berlin (DE); LEU, Christian, D-12524 Berlin (DE)
(74) Vertreter: Specht, Volker
(86) Internationale Anmeldenummer: DE0001742
(87) Internationale Veröffentlichungsnummer: WO00074160

(56) Entgegenhaltungen:
- EP-A- 0 339 114
- EP-A- 0 690 519
- US-A- 5 187 025
- PATENT ABSTRACTS OF JAPAN vol. 1998, no. 03, 27. Februar 1998 (1998-02-27) -& JP 09 289028 A (TANAKA KIKINZOKU KOGYO KK), 4. November 1997 (1997-11-04)
- PATENT ABSTRACTS OF JAPAN vol. 017, no. 578 (E-1450), 20. Oktober 1993 (1993-10-20) -& JP 05 174845 A (AGENCY OF IND SCIENCE & TECHNOL;OTHERS: 01), 13. Juli 1993 (1993-07-13)
- PATENT ABSTRACTS OF JAPAN vol. 1996, no. 10, 31. Oktober 1996 (1996-10-31) -& JP 08 148169 A (TOKYO GAS CO LTD), 7. Juni 1996 (1996-06-07)
- PATENT ABSTRACTS OF JAPAN vol. 1998, no. 12, 31. Oktober 1998 (1998-10-31) -& JP 10 189018 A (TOKYO GAS CO LTD), 21. Juli 1998 (1998-07-21)

## Beschreibung

Die Erfindung betrifft eine Membran-Elektroden-Einheit für Brennstoffzellen, Membran-Elektrolyseure und Membran-Kompressoren, bestehend aus einer Polymerelektrolytmembran und diese beidseitig bedeckenden Elektroden sowie einem am Umfang der Membran-Elektroden-Einheit angebrachten Versteifungsrahmen.

Derartige Membran-Elektroden-Einheiten, deren Elektroden bekanntermaßen eine auf ein Trägermaterial aufgebrachte poröse Katalysatorschicht aufweisen und mit Gasverteilern und Stromableitern abgedeckt sind, weisen zur Vereinfachung der Handhabung und Montage am Umfang eine rahmenartige Versteifung auf. Gerade bei einer Mehrzahl zu einer Brennstoffzellenanlage aneinandergereihter Membran-Elektroden-Einheiten mit Montagebohrungen und Durchführungen für die Kühl- und Reaktionsmedien sowie entsprechenden Dichtungen in diesem nicht aktiven Bereich stellt eine Versteifung der einzelnen Einheiten eine erhebliche Montageerleichterung dar.

Bei einer aus der US 5 187 025 bekannten Membran-Elektroden-Einheit dieser Art ist der Versteifungsrahmen aus zwei bündig an die Elektroden anschließenden Elektrodenrahmen, zwei sich nach innen in die Membran-Elektroden-Einheit als Rahmenbrücke erstreckenden Kunststoffschichten und einer ebenfalls in die Membran-Elektroden-Einheit hineinreichenden Kunststoff-Membranschicht (Membranrahmen) gebildet, wobei die Verbindung zwischen dem Elektrodenrahmen und den Rahmenbrücken bzw. den Rahmenbrücken und dem Membranrahmen sowie der Polymerelektrolytmembran mit Hilfe einer dünnen Acryl-Klebemittelschicht erfolgt. Diese wegen ihrer Versteifung für die Herstellung von Brennstoffzellen vorteilhafte Membran-Elektroden-Einheit ist jedoch insofern nachteilig, als deren Fertigung wegen der vielen Einzelteile und des Auftragens von mehreren Klebeschichten mit einem erheblichen Aufwand verbunden ist und die Handhabung von Klebstoffen im Fertigungsprozeß ohnehin Schwierigkeiten bereitet, zumal die Oberflächenenergie der als Trägermaterial verwendeten Polymere gering ist und somit eine gute Haftung nur schwer realisierbar ist.

Der Erfindung liegt daher die Aufgabe zugrunde, eine Membran-Elektroden-Einheit der eingangs erwähnten Art anzugeben, die mit geringem Aufwand hergestellt werden kann und eine sichere Abdichtung der elektrochemischen Zelle gewährleistet.

Erfindungsgemäß wird die Aufgabe bei einer Membran-Elektroden-Einheit, die aus einer Polymerelektrolytmembran und diese beidseitig bedeckenden Elektroden sowie einem am Umfang der Membran-Elektroden-Einheit angebrachten Versteifungsrahmen besteht, in der Weise gelöst, daß der Versteifungsrahmen durch eine beidseitig im Außenrandbereich und/oder im Randbereich von zur Montage und/oder Medienführung vorgesehenen Durchbrüchen aufgetragene Schmelzkleberschicht und eine ein- oder beidseitig auf der Schmelzkleberschicht angebrachte biegesteife Platte gebildet ist, wobei die Schmelzkleberschichten durch Druck- und Wärmeeinwirkung mit der (den) biegesteifen Platte(n) und der Membran-Elektroden-Einheit zu einem einstückigen Versteifungsabschnitt in dem betreffenden Randbereich verbindbar sind.

Die Schmelzkleberschichten, die sich bei der Außenrandverstärkung vorzugsweise über die Außenkante der Membran-Elektroden-Einheit hinaus erstrecken, gleichen beim Verpressen mit der biegesteifen Platte und der Membran-Elektroden-Einheit Unebenheiten und Dickenunterschiede aus, dringen tief in vorhandene Hohlräume ein und gehen somit in dem überstehenden Bereich eine enge Verbindung miteinander sowie mit der Membran-Elektroden-Einheit und der (den) biegesteifen Platte(n) ein. Es wird daher mit nur wenigen Bauteilen ein homogener und in sich stabiler Versteifungsabschnitt geschaffen, der auf einfache Weise hergestellt werden kann, eine einfache Handhabung der Membran-Elektroden-Einheit gewährleistet und für eine sichere Abdichtung der elektrochemischen Zelle im Außenrandbereich sowie im Bereich von Durchbrüchen für die Materialführung und Montage sorgt.

Weitere Merkmale und vorteilhafte Weiterbildungen der Erfindung ergeben sich aus den Unteransprüchen und der nachfolgenden Beschreibung einer bevorzugten Ausführungsform der Erfindung.

Beispielsweise erstrecken sich nach einem weiteren wichtigen Merkmal der Erfindung die Schmelzkleberschichten etwa um die Hälfte ihrer Breite über den Außenrand der Membran-Elektroden-Einheit hinaus, so daß die Schmelzkleberschichten in diesem Bereich unmittelbar miteinander verschmelzen können und andererseits der Materialaufwand für die Membran-Elektroden-Einheit, von der nur ein schmaler Rand abgedeckt ist, verringert wird.

Nach einem weiteren Erfindungsmerkmal wird ein Schmelzkleber mit ionischen oder stark polaren Gruppen eingesetzt, die mit den ionischen Gruppen der Polymerelektrolytmembran in eine enge Wechselwirkung treten und daher eine gute Haftung des Schmelzklebers an der Membran gewährleisten.

Ein Ausführungsbeispiel der Erfindung wird anhand der Zeichnung näher erläutert. Es zeigen:
- Fig. 1: eine Schnittansicht einer erfindungsgemäß am Umfang und mittig mit einem Versteifungsrahmen ausgebildeten Membran-Elektroden-Einheit;
- Fig. 2: eine Draufsicht der nach Fig. 1 versteiften Membran-Elektroden-Einheit;
- Fig. 3: eine Schnittansicht einer erfindungsgemäßen Membran-Elektroden-Einheit mit einer im umfangsseitig ausgebildeten Versteifungsrahmen vorgesehenen Bohrung zur Medienführung sowie einer bündig mit dem Versteifungsrahmen abschließenden Gasführungsstruktur und Stromableitern; und
- Fig. 4: eine Schnittansicht einer Membran-ElektrodenEinheit, bei der der Versteifungsrahmen mit dem Gasverteiler verbunden ist.

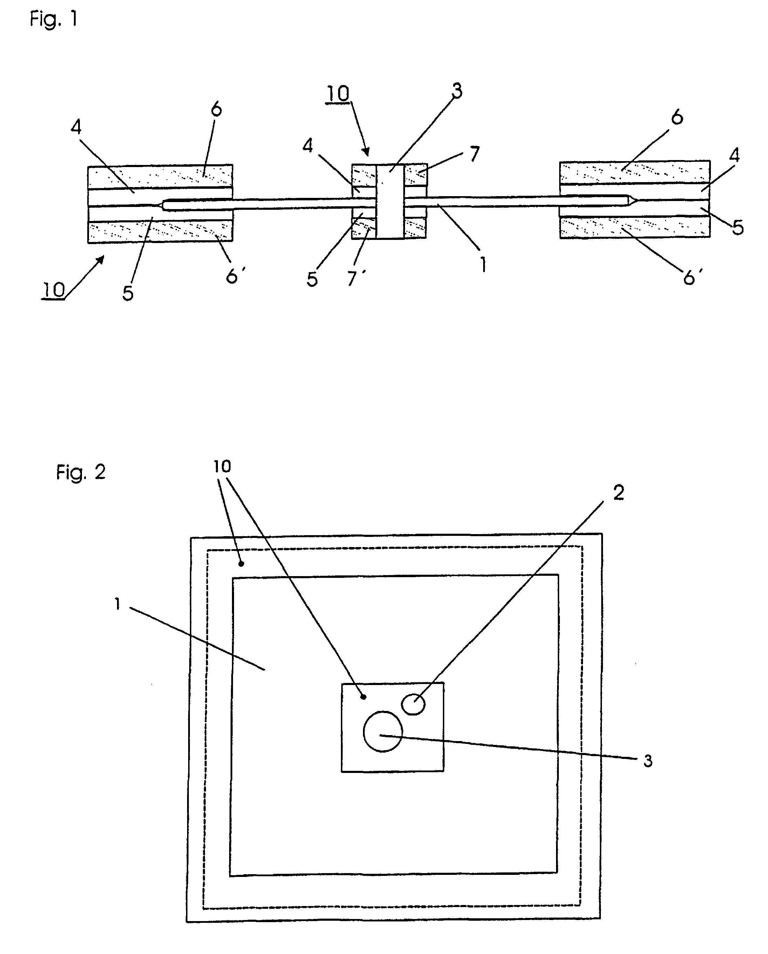

In Fig. 1 und 2 ist eine Membran-Elektroden-Einheit 1 dargestellt, die aus einer Polymerelektrolytmembran und einer beidseitig auf diese aufgetragenen porösen, auf ein Trägermaterial aus Kohlenstoff aufgebrachten Katalysatorschicht zur Ausbildung der Anode und der Kathode besteht und in ihrem äußeren Randbereich und im Bereich von Durchbrüchen 2, 3 zur Medienführung bzw. Montage beidseitig mit einer Schmelzkleberschicht 4, 5 versehen ist. Die Schmelzkleberschichten 4, 5 am Umfangsrand der Membran-Elektroden-Einheit 1 ragen etwa zur Hälfte ihrer Breite über die Außenkante hinaus und sind in diesem überstehenden Bereich zu einem einstückigen Gebilde verbunden. Auf den Schmelzkleberschichten befindet sich zur Versteifung jeweils eine biegesteife Platte 6, 6' und 7, 7', die aus Kunststoff oder einem Kunststoff enthaltenden Material, das auch faserverstärkt sein kann, besteht. Die Fertigung der versteiften Membran-Elektroden-Einheit 1 erfolgt in der Weise, daß nach dem Zuschneiden die betreffenden Randbereiche mit einem Schmelzkleber und der biegesteifen Platte 6, 6' bzw. 7, 7' belegt werden und unter Wärme- und
Druckeinwirkung eine innige Verbindung zwischen den überstehenden Schmelzkleberschichten und zwischen dem Schmelzkleber und der Membran-Elektroden-Einheit 1 bzw. den biegesteifen Platten 6, 6' und 7, 7' hergestellt wird, wobei der Schmelzkleber beim Heißverpressen die vorhandenen Dickenunterschiede und Unebenheiten ausgleicht und tief in vorhandene Poren der Membran-Elektroden-Einheit 1 und der biegesteifen Platten 6, 6' und 7, 7' eindringt und die beiden freien, überstehenden Schmelzkleberschichten zu einer homogenen Einheit verschmelzen. Die Membran-Elektroden-Einheit 1 verfügt somit am Außenrand und gegebenenfalls im Bereich ihrer aktiven Fläche vorgesehener Durchbrüche 2, 3 für die Medienführung und Montage über einen oder mehrere Versteifungsrahmen 10, der (die) eine problemlose Handhabung bei der Montage und eine sichere Abdichtung am Rand und am Umfang von Durchbrüchen gewährleistet (gewährleisten). Die Gesamtfläche der Membran-Elektroden-Einheit 1 kann relativ klein gehalten werden. Die versteifte Einheit besteht aus wenigen Bauteilen, und der Fertigungsprozeß ist sehr einfach.

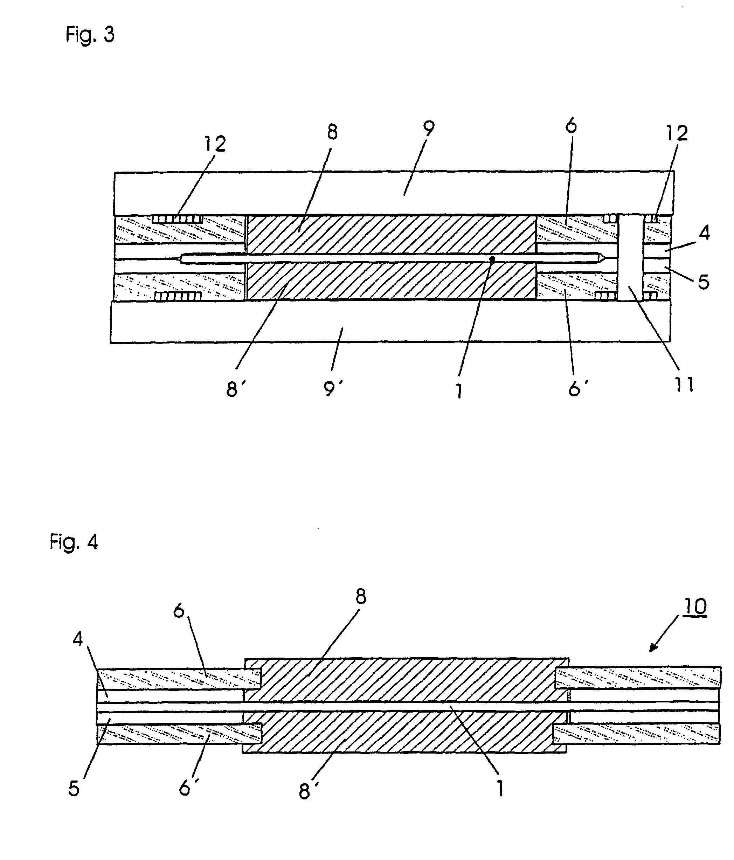

In Fig. 3 ist die versteifte Membran-Elektroden-Einheit 1 in Verbindung mit Gasverteilern 8 und Stromableitern 9 (oder bipolaren Platten) dargestellt. In dem Versteifungsrahmen 10 befindet sich ein Durchbruch 11 zur Medienführung. Der Versteifungsrahmen ist zum Stromableiter 9 hin durch eine zusätzliche Dichtung 12 abgedichtet. Die Dichtung 12 ist hier in die biegesteife Platte 6, 6' eingelassen, kann sich aber auch über die gesamte Oberfläche der Platten 6, 6' erstrecken.

Fig. 4 zeigt eine weitere Ausführungsform der Erfindung, bei der die biegesteifen Platten 6, 6' stirnseitig in die Gasverteiler 8, 8' eingelassen sind, um diese zu halten und so eine kompakte und leicht zu handhabende Zelle zu bilden. In dieser Variante ist der Versteifungsrahmen 10 vollflächig mit dem Rand der Membran-Elektroden-Einheit 1 verbunden.

Die für die Membran-Elektroden-Einheit 1 verwendeten Polymere besitzen eine geringe Oberflächenenergie, so daß wegen der daraus resultierenden schlechten Haftverbindung mit herkömmlichen Klebern eine stabile Verbindung mit dem Versteifungsrahmen 10 nur schwer realisierbar ist. Außerdem darf die Erweichungstemperatur nicht zu hoch sein, damit das Membranmaterial aufgrund zu hoher Temperaturen nicht beschädigt wird. Es wird daher ein Schmelzkleber mit ionischen oder stark polaren Gruppen eingesetzt, der mit den ionischen Gruppen der Polymerelektrolytmembran eine Oberflächenwechselwirkung eingeht und hohe Adhäsionskräfte gewährleistet. Der Schmelzpunkt des Schmelzklebers liegt vorzugsweise zwischen 80 und 140 °C, so daß die Polymerelektrolytmembran beim Aufschmelzen des Versteifungsrahmens unbeschädigt bleibt und andererseits die Erweichungstemperatur des Schmelzklebers im Brennstoffzellenbetrieb nicht überschritten wird. Hier werden Schmelzklebstoffe mit Carbonsäuregruppen, deren Salzen oder polaren Derivaten der Carbonsäure eingesetzt, die beispielsweise durch Copolymerisation eines Monomers mit diesen Stoffen erzeugt werden.

## Patentansprüche

1. Membran-Elektroden-Einheit für Brennstoffzellen, Membran-Elektrolyseure und Membran-Kompressoren, bestehend aus einer Polymerelektrolytmembran und diese beidseitig bedeckenden Elektroden sowie einem am Umfang der Membran-Elektroden-Einheit angebrachten Versteifungsrahmen, **dadurch gekennzeichnet, daß** der Versteifungsrahmen (10) durch eine ein- oder beidseitig im Außenrandbereich und/oder im Randbereich von zur Montage und/oder Medienführung vorgesehenen Durchbrüchen (2, 3) aufgetragene Schmelzkleberschicht (4, 5) und eine ein- oder beidseitig auf der Schmelzkleberschicht angebrachte biegesteife Platte (6, 6'; 7, 7') gebildet ist, wobei die Schmelzkleberschichten (4, 5) durch Druck- und Wärmeeinwirkung mit der(den) biegesteifen Platte(n) (6, 6' ; 7, 7') und der Membran-Elektroden-Einheit (1) zu einem einstückigen Versteifungsabschnitt in dem betreffenden Randbereich verbindbar sind.

2. Membran-Elektroden-Einheit nach Anspruch 1, **dadurch gekennzeichnet, daß** die Schmelzkleberschichten (4, 5) am Außenrand der Membran-Elektroden-Einheit (1) über deren Außenkante hinausragen und die in diesem Bereich einander zugewandten überstehenden Flächen zu einer homogenen einstückigen Schmelzkleberschicht verschmolzen sind.

3. Membran-Elektroden-Einheit nach Anspruch 1, **dadurch gekennzeichnet, daß** die Schmelzkleberschichten (4, 5) aus einem vorzugsweise im Temperaturbereich zwischen 80 und 140 °C schmelzenden Schmelzkleber mit ionischen oder stark polaren Gruppen besteht, die mit den ionischen Gruppen der Polymerelektrolytmembran eine Oberflächenwechselwirkung eingehen.

4. Membran-Elektroden-Einheit nach Anspruch 3, **dadurch gekennzeichnet, daß** ein Schmelzkleber mit in diesen durch Copolymerisation eingebrachten Gruppen der Carbonsäure oder deren Salzen oder polaren Derivaten der Carbonsäure vorgesehen ist.

5. Membran-Elektroden-Einheit nach einem der Ansprüche 1 bis 4, **dadurch gekennzeichnet, daß** in den durch den (die) Versteifungsrahmen (10) umgrenzten Raum Gasverteiler (8, 8') eingesetzt sind.

6. Membran-Elektroden-Einheit nach Anspruch 5, **dadurch gekennzeichnet, daß** die biegesteifen Platten (6, 6') stirnseitig in die Gasverteiler (8, 8') eingelassen sind.

7. Membran-Elektroden-Einheit nach einem der Ansprüche 1 bis 6, **gekennzeichnet durch** beidseitig angeordnete Stromableiter oder bipolare Platten (9), wobei zwischen diesen und dem Versteifungsrahmen (10) mindestens einseitig eine Dichtung (12) angeordnet ist.

8. Membran-Elektroden-Einheit nach einem der Ansprüche 1 bis 7, **dadurch gekennzeichnet, daß** die biegesteifen Platten (6, 6'; 7, 7') aus Kunststoff oder einem Kunststoff enthaltenden Material, das auch faserverstärkt sein kann, bestehen.

9. Membran-Elektroden-Einheit nach einem der Ansprüche 1 bis 8, **dadurch gekennzeichnet, daß** in dem äußeren Versteifungsrahmen (10), und zwar in dem über die Membran-Außenkante überstehenden Bereich, Durchbrüche (11) für die Montage und zur Medienführung ausgebildet sind.

## Claims

1. A membrane electrode unit for fuel cells, membrane electrolyzers and diaphragm compressors consisting of a polymer electrolyte membrane and electrodes that cover it on both sides as well as a support frame attached to the perimeter of the membrane electrode unit, **characterized in that** said support frame (10) is formed by hot melt adhesive layers (4, 5) applied both-sided on the outer edges and/or edge areas of openings (2, 3) provided for mounting and/or for conducting media and deflection resistant plates (6, 6'; 7, 7') attached to said hot melt adhesive layers on one or both sides wherein the hot melt adhesive layers can be bonded to the deflection resistant plate(s) and the membrane electrode unit 1 to form a one-piece support section in the respective edge area.

2. The membrane electrode unit according to claim 1, **characterized in that** the hot melt adhesive layers (4, 5) at the outer edge of the membrane electrode unit (1) protrude beyond its outer edge and that the protruding surfaces that face each other are fused into a homogeneous one-piece hot melt adhesive layer.

3. The membrane electrode unit according to claim 1, **characterized in that** the hot melt adhesive layers (4, 5) preferably consist of a hot melt adhesive melting in the range from 80 to 140°C and having ionic or strongly polar groups that enter into surface interaction with the ionic groups of the polymer electrolyte membrane.

4. The membrane electrode unit according to claim 3, **characterized in that** a hot melt adhesive is used that has groups of carboxylic acid or salts thereof or polar derivatives of carboxylic acid that were inserted by copolymerization.

5. The membrane electrode unit according to any one of claims 1 through 4, **characterized in that** gas distributors (8, 8') are inserted in the space circumscribed by the support frame(s) (10).

6. The membrane electrode unit according to claim 5, **characterized in that** the deflection resistant plates (6, 6') are embedded in the faces of the gas distributors (8, 8').

7. The membrane electrode unit according to any one of claims 1 through 6, **characterized in that** power arresters or bipolar plates (9) are arranged on both sides, and that a seal (12) is placed at least on one side between this component and the support frame(10).

8. The membrane electrode unit according to any one of claims 1 through 7, **characterized in that** the deflection resistant plates (6, 6'; 7, 7') consist of plastic or a material containing plastic that may be fiber-reinforced.

9. The membrane electrode unit according to any one of claims 1 through 8, **characterized in that** openings (11) for assembly and for conducting media are provided in the outer support frame (10), more specifically in the section protruding beyond the outer edge of the membrane.

## Revendications

1. Unité membrane-électrode pour des cellules à combustible, pour des électrolyseurs à membrane et pour des compresseurs à membrane, constituée par une membrane électrolyte en polymère et par des électrodes recouvrant celle-ci des deux côtés, ainsi que par un cadre de rigidification agencé à la périphérie de l'unité membrane-électrode, **caractérisée en ce que** le cadre de rigidification (10) est formé par une couche de colle fusible (4, 5) déposée sur un côté ou sur les deux côtés dans la zone de bord extérieure et/ou dans la zone de bord de traversées (2, 3) ménagées pour le montage et/ou l'amenée de fluides, et par une plaque (6, 6' ; 7, 7') rigide en flexion agencée sur un côté ou sur les deux côtés sur la couche de colle fusible, les couches de colle fusible (4, 5) étant susceptibles d'être reliées sous l'action de pression et de chaleur à la ou aux plaque(s) (6, 6' ; 7, 7') rigide(s) en flexion et à l'unité membrane-électrode (1) pour former un tronçon de rigidification d'un seul tenant dans la zone de bord concernée.

2. Unité membrane-électrode selon la revendication 1, **caractérisée en ce que** les couches de colle fusible (4, 5) dépassent au niveau du bord extérieur de l'unité membrane-électrode (1) au-delà de son arête extérieure, et les surfaces dépassantes tournées l'une vers l'autre dans cette zone sont fondues pour former une couche de colle fusible homogène d'un seul tenant.

3. Unité membrane-électrode selon la revendication 1, **caractérisée en ce que** les couches de colle fusible (4, 5) sont constituées de colle fusible fondant de préférence dans une plage de température comprise entre 80 et 140°C et présentant des groupes ioniques ou fortement polaires qui établissent une interaction superficielle avec les groupes ioniques de la membrane électrolyte en polymère.

4. Unité membrane-électrode selon la revendication 3, **caractérisée en ce qu'**il est prévu une colle fusible présentant des groupes intégrés dans celle-ci par copolymérisation d'acide carboxylique ou de ses sels ou des dérivés polaires de l'acide carboxylique.

5. Unité membrane-électrode selon l'une des revendications 1 à 4, **caractérisée en ce que** des distributeurs de gaz (8, 8') sont mis en place dans l'espace limité par le ou les cadre(s) de rigidification (10).

6. Unité membrane-électrode selon la revendication 5, **caractérisée en ce que** les plaques (6, 6') rigides en flexion sont noyées du côté frontal dans les distributeurs de gaz (8, 8').

7. Unité membrane-électrode selon l'une des revendications 1 à 6, **caractérisée par** des dérivations de courant électrique ou par des plaques bipolaires (9), agencées des deux côtés, un joint (12) étant agencé sur au moins un côté entre celles-ci et le cadre de rigidification (10).

8. Unité membrane-électrode selon l'une des revendications 1 à 7, **caractérisée en ce que** les plaques (6, 6'; 7, 7') rigides en flexion sont constituées en matière plastique ou en un matériau contenant de la matière plastique, qui peut également être renforcé de fibres.

9. Unité membrane-électrode selon l'une des revendications 1 à 8, **caractérisée en ce qu'**il est prévu, dans le cadre de rigidification extérieur (10), à savoir dans la zone dépassant au-delà de l'arête extérieure de la membrane, des traversées (11) pour le montage et pour l'amenée de fluides.
